# EUROPEAN PATENT SPECIFICATION

(11) **EP 1 251 642 B1**
(45) Date of publication and mention of the grant of the patent: **16.03.2005**
(21) Application number: 01610042.2
(22) Date of filing: 19.04.2001
(51) Int. Cl.: H04B 1/707

(54) **A CDMA mobile station with power saving using adaptive correlation window in path search**
Eine CDMA Mobilstation mit Leistungsersparung unter Verwendung eines anpassbaren Korrelationsfensters in der Pfadsuche
Station mobile ARMC avec économie d'énergie utilisant une fenêtre de corrélation adaptative dans la recherche de voie

(43) Date of publication of application: 23.10.2002
(73) Proprietor: Telefonaktiebolaget LM Ericsson (publ), 164 83 Stockholm (SE)
(72) Inventor: Henriksson, Johan, SE-703 85 Glanshammar (SE)
(74) Representative: Sigh, Erik

(56) References cited:
- EP-A- 0 924 868
- EP-A- 0 951 148
- WO-A-01/26244

## Description

### Field of the invention

The invention relates to wireless communication between a base station and a mobile station such as a mobile telephone or other mobile communications device with a downlink receiver, and in particular to Code Division Multiple Access (CDMA) communications. The invention provides means for reducing the power consumption of such communications devices.

### Background of the invention

In wireless mobile communications, radio signals from a transmitter, whether fixed or mobile, will often be reflected by fixed obstacles such as buildings or geological formations like the ground surface or hills and mountains, or by moving obstacles such as cars, trains, aircraft and possibly also living creatures. In addition to signals propagating along the direct line-of-sight path from the transmitting antenna to the receiving antenna (in the following referred to as direct signals), reflected signals may also reach the receiving antenna. Direct signals will have the shortest path to travel and will therefore be the first signals to be received. Reflected signals travel a longer path than the direct signals, and reflected signals are thereby delayed in their arrival at the receiving antenna relative to the direct signals. Having travelled longer distances than the direct signals, the reflected signals will most often, due to propagation loss, be weaker than the direct signals, unless there is an obstacle in the line-of-sight path that attenuates or possibly blocks or extinguishes the direct signals, in which case possibly only reflected signals are received. In such cases the first received signal may possibly not be the strongest signal.

Different reflecting objects give different delays, and in addition to the direct signals, the total signal received from the transmitting antenna will thus be composed also by one or more reflected signals with individual delays, all of which represent the same information. However, due to the different delays, the information will be spread or smeared in time. In addition to the moving obstacles the transmitter and/or the receiver may also be movable or mobile, whereby the transmission conditions may vary dramatically even over short distances and within short periods of time.

The delay spread is also referred to as the impulse response, ie the received signal that would result from one short impulse being transmitted from the base station in a multi-path transmission. The delay spread or impulse response is dynamic and changes with the position of the mobile station and with the position of moving reflecting objects. The impulse response typically varies from a few 100 ns in an indoor environment to eg 10-15 µs in hilly outdoor terrain, and in an urban environment the delay spread will typically be a few µs.

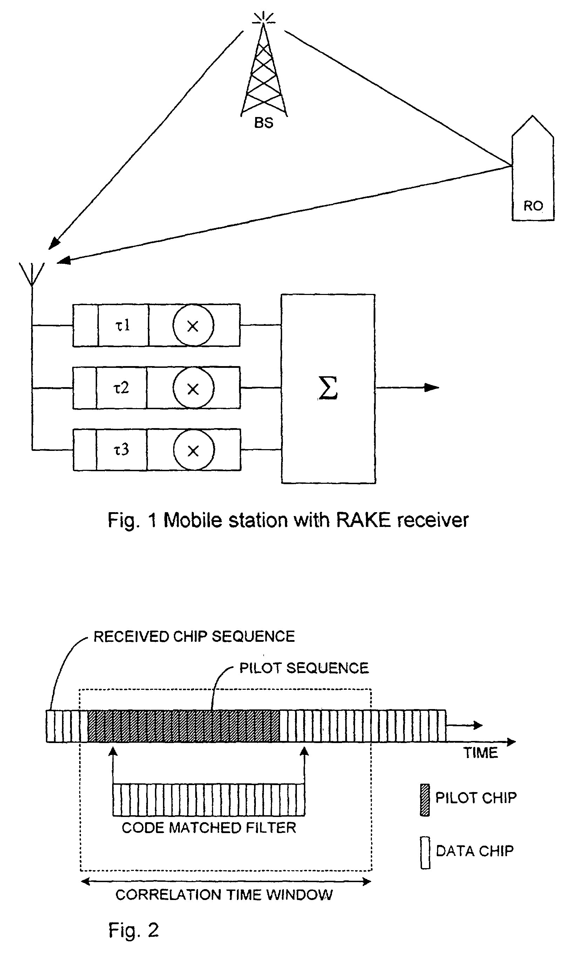

Multi-path reception, ie where several reflected and delayed signals are received, may cause problems due to the time spreading of the received information. However, methods exist for compensating for their different delays. One known method is illustrated schematically in figure 1 and is described below in connection with the description of the invention. In such known methods power consuming correlation calculations are performed. Reduction of power consumption is of prime interest to the manufacturers and to the users alike.

It is an object of the invention to reduce the power consumption of mobile stations. Several approaches have been made in the prior art to reduce power consumption, a few of which are summarised below.

EP 924 868 discloses a method which involves receiving information with respect to a search window from a base station apparatus, dividing the search window of a base station apparatus to be searched into search widths, and detecting a correlation of each of the search widths in parallel to obtaining a correlation value in a first integrating time. The system can carry out a fast cell search during communication and waiting time and reduce power consumption simultaneously.

EP 838 910 discloses an acquisition scheme for an asynchronous DS-CDMA communications system. It performs initial cell search and detects correlation between specified short code and received signal, before detecting long code timing of a relevant base station according to maximum value of correlated outputs. It has low power consumption due to the use of a matched filter employing a neural network.

US 5 604 745 discloses a TDMA telephone apparatus with an equaliser for the necessary data, which captures data in predetermined slots and outputs equalised data. A storage circuit holds received data and sends it to the equaliser. A reception position changing circuit corrects a received data capture position through slot synchronisation. This is performed according to position correction data from the delay equaliser when the position of data from the equaliser is offset. A counter circuit outputs a reference clock count value from a clock pulse generation circuit to determine a reception window width. A comparator circuit array determines the amount of data to be stored in the storage circuit and the reception window width. The system reduces the amount of data to be processed by the equaliser, reduces processing time and power consumption.

EP 938 242 discloses a mobile terminal with a waveform equaliser. In order to reduce power consumption the waveform equaliser is switched off when certain conditions are met.

JP 11 261 523 discloses a mobile terminal in which selected circuits and functions are switched off when certain conditions are met, whereby power is saved.

US 5 317 323 discloses a system using the Global Positioning System (GPS) for accurately locating a mobile station.

### Summary of the invention

At long distances between the base station and the mobile station, both direct signals and reflected signals may be relatively weak, and reflected signals may have travelled a much longer distance than the direct signals and may consequently have a considerably longer delay than the line-of-sight signals. In order to adequately recover the time-spread information, it is therefore necessary to use a relatively long correlation time window to ensure that the combiner can make use of all multi-path components in order not to lose received power containing useful information. This is power consuming, and the power consumption is approximately proportional to the length of the correlation time window.

At short distances between the base station and the mobile station, however, reflected signals from nearby reflecting objects are relatively strong and have relatively short delays, whereas reflected signals from remote reflecting objects still have relatively long delays and consequently are relatively weak. The reflected signals from nearby reflecting objects will thus dominate in strength over the reflected signals from remote reflecting objects. The time-spread information can thus often be adequately recovered without significant loss of received signal power by using, in addition to the line-of-sight signal, only reflected signals with relatively short delays relative to the line-of-sight signal or the first received signal.

The invention makes use of this fact and the length of the correlation time window is adapted in accordance with the distance between the base station and the mobile station. Thus, at long distances from the base station a full-length correlation time window is used, and at short distances only a shorter correlation time window is used, whereby power consumption is reduced. In the mobile station the information about the distance is either obtained from signals relating to propagation loss transmitted from the base station or by other means such as the satellite based Global Positioning System (GPS).

Thus, in accordance with the present invention there is provided a mobile station according to claim 1.

### Short description of the drawings

Figure 1 shows schematically a prior art RAKE receiver used in a CDMA communications system,
Figure 2 shows the principle of path search in figure 1, and
Figure 3 shows schematically multi-path reception in a CDMA communications system.

### Detailed description of the invention

Figure 1 schematically shows the principle in a known system for extracting substantially all useful information from a multi-path transmission, ie from signals received with different delays. In addition to a signal following the direct line-of-sight path from the base station to the mobile station, a signal reflected by a reflecting object RO, such as a building, is shown. The reflected signal follows a longer path than the direct path and is correspondingly delayed relative to the direct signal. If many reflecting objects are present, this will further complicate the situation. For simplicity, in addition to the direct signal, only one reflected signal is shown.
CDMA communications systems use a RAKE receiver to compensate for multi-path reception of signals, ie signals having different delays, emitted from the base station. The process of detecting multi-path components is also referred to as path search.

In figure 1 the receiver is of the type known as a RAKE receiver wherein the received signal from the receiving antenna is fed to several RAKE "fingers", eg three as shown, arranged in parallel. In principle, the individual received direct and reflected signals contain or represent the same information, which however has been spread in time. In the RAKE receiver the received signal is fed to a code-matched filter, and a correlation is determined over a large number of chips. The sum is output as the correlation at the particular time sample at the particular instant in time. Then the received signal is shifted to the next incoming chip, and a new correlation is made, etc. The result is that, in the RAKE receiver the individual received and de-spreaded direct and reflected signals are summed coherently. In a RAKE receiver several reflected signals with individual delays thus contribute to re-establishing or extracting the useful signal with a better signal-to-noise ratio.

In order to accommodate for large time spreads, ie long impulse responses, the RAKE receiver must have. a correlation time window at least as long as the longest differential delay to be taken into account. In particular, at long distances between the base station and the mobile station there may be large differential delays between direct and reflected signals, possibly up to 10-15 µs or more in hilly outdoor terrain. Furthermore, at long distances the received signals may also be weak, so that it is necessary to use several reflected signals to recover the original signal with a satisfactory signal-to-noise ratio. The length of the correlation time window determines the maximum time spread or difference in delay that can be accommodated for. The correlation calculation is power consuming and the power consumed is proportional to the length of the correlation time window or windows. Therefore, it is desirable to keep the correlation time window short in order to save power.

Figure 2 shows a code-matched filter in the RAKE receiver of figure 1. A received sequence of chips or symbols containing a sequence of pilot chips or pilot symbols (also referred to as a training sequence) is continuously compared with the code-matched filter. When the received chips match the code-matched filter, the output from code-matched filter the will be high (logic "1"). If cross-correlation and auto-correlation properties of the code is "good", the output from this correlation will only be high exactly when the received chip sequence aligns in time with the code-matched filter, in the example shown in figure 2 this will occur three chips later than the instance in time illustrated in figure 2.

In case of multi-path reception the reflected, ie delayed, signals the sequence of pilot chips in the reflected signals will also be detected in the code-matched filter and give a high output, however after possibly several shifts of the received signal since they are delayed.

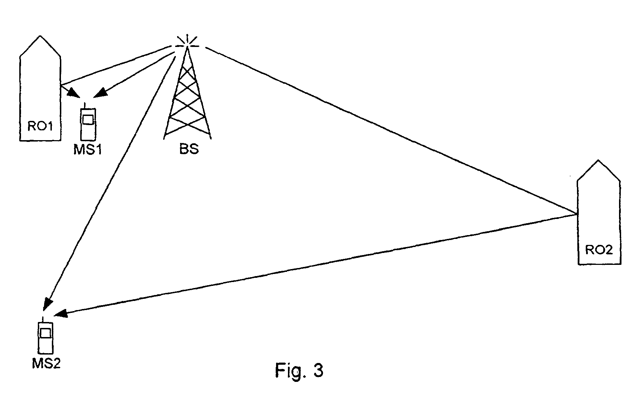

Figure 3 shows schematically a CDMA communications system with a base station BS and a first mobile station MS1 relatively close to the base station, and a second mobile station MS2 relatively far from the base station. The mobile stations use the known RAKE receiver shown in figure 1 to compensate for the different delays in multi-path reception. A first reflecting object RO1 is relatively near both to the base station and to the first mobile station MS1, and a second reflecting object RO2 is relatively far from both the base station and the first and second mobile stations.

The first mobile station MS1 receives a first signal as a direct signal from the base station BS and a signal reflected by the first reflecting object RO1 with a relatively short delay relative to the direct signal. Because the first mobile station MS1 is relatively close to the base station BS, the first received signal and the reflected signals from the relatively nearby reflecting object RO1 will be relatively strong and will arrive with relatively short delays. A reflected signal from the relatively far reflecting object RO2 may possibly also be received by the first mobile station MS1, and due to the longer distance such reflected signal will have a greater propagation loss and will be received at the first mobile station with a relatively long delay.

Correspondingly, the second mobile station MS2 receives a first direct signal form the base station BS and a signal reflected by the second reflecting object RO2 with a relatively long delay relative to the direct signal. Because the second mobile station MS2 is relatively far from the base station BS, the first received signal and the reflected signals from the relatively nearby reflecting object RO1 will be relatively weak and will arrive with relatively long delays.

Ideally, ie in free space, the signal power decreases with the square of the distance from the transmitter, ie the base station. In practice, however, due to eg absorption in the atmosphere and in intervening objects and to scattering by reflecting objects, the signal power will decrease more rapidly with the distance from the base station. In case of direct line-of-sight communication with no or only insignificant reflected signals it is primarily the geographical distance that determines the propagation loss. In the more frequently occurring case of multi-path reception the propagation loss depends on several other factors. It can be shown that the signal power added by a signal having a long delay, ie by a path at the end of the correlation time window, decreases with the distance between the base station and the mobile station. This means that when the mobile station is close to the base station, reflected signals from far reflecting objects will only contribute insignificantly to the received signals.

In known CDMA communications systems the base station transmits information on the actual power transmitted by the base station. This information is transmitted on a specific code or channel and received by the mobile station. The mobile station compares the actually received signal strength to the received information on signal strength transmitted by the base station to calculate the actual propagation loss of the transmitted signal also known as L-perch. This is done in order to enable the mobile station to adapt its own transmission power to the most economical level, whereby battery power can be saved. Thus, when the propagation loss is low, the mobile station reduces its transmission power, and when the propagation loss is high, the mobile station increases its transmission power correspondingly.

The information on the actual power transmitted by the base station is perfectly suited for estimating the distance between the base station and the mobile station, also in case of no direct signals but only reflected signals being received. According to the invention, the mobile station makes use of the already available information on propagation loss to estimate the distance from the base station to adapt the length of the correlation time window. Depending on the length of a detected or estimated distance, the length of the correlation time windows is adjusted to a value, which is no longer than necessary to accommodate to the length of a detected or estimated distance. This means that, at short distances, the length of the correlation time windows is made short and only signals with short delays are taken into account and used for the de-spreading or extraction of the information, and signals with long delays are not.

Alternatively, the number of RAKE fingers or the number of correlation time windows can be adjusted or adapted to the actual need, and in particular reduced, when a short distance is detected or estimated, or when the desired result can be obtained with a reduced number of correlation time windows.

Other methods than the information from the base station on propagation loss can be used to obtain information about the distance between the base station and the mobile station. One good example of such methods makes use of the satellite-based Global Positioning System (GPS), which requires a GPS receiver in the mobile station.

## Claims

1. A mobile station for use in a Code Division Multiple Access (CDMA) wireless communications system with a base station (BS), the mobile station comprising, for compensating for multi-path reception of signals emitted by the base station and received with different delays by the mobile station a RAKE receiver having:
a code-matched filter having a predetermined string of pilot chips and means for comparing strings of chips in a received signal with the string of pilot chips and for outputting a signal with a value dependent on the result of the comparison, and
- a correlation time window for determining correlation of values output from the code-matched filter over the correlation time window, the correlation time window having a predetermined length,
**characterized in that** the length of the correlation time window is adjusted based on the detected or estimated distance between the base station and the mobile station.

2. A mobile station according to claim 1, **characterized in that** the detected or estimated distance between the base station and the mobile station is based on information from the base station on its transmitted power.

3. A mobile station according to claim 1, **characterized in that** the detected or estimated distance between the base station and the mobile station is based on information on the actual position of the mobile station relative to the base station.

4. A mobile station according to claim 3, **characterized in that** the information on the actual position of the mobile station relative to the base station are based on information from a global positioning system (GPS).

## Patentansprüche

1. Eine Mobilstation zum Gebrauch in einem drahtlosen Code Division Multiple Access (CDMA) Kommunikationssystem mit einer Basisstation (BS), wobei die Mobilstation zur Kompensation von Mehrwegeempfang von Signalen, von der Basisstation ausgesendet und mit unterschiedlichen Verzögerungen von der Mobilstation mit einem RAKE Empfänger empfangen, umfasst:
- ein Code-angepasstes Filter mit einer vorbestimmten Kette von Pilotchips und Mittel zum Vergleichen der Ketten von Chips in einem empfangenen Signal mit der Kette von Pilotchips und zum Ausgeben eines Signals mit einem von dem Ergebnis des Vergleiches abhängigen Wert; und
- ein Korrelationszeitfenster zum Bestimmen der Korrelation von Werten, die von dem Codeangepassten Filter über das Korrelationszeitfenster ausgegeben werden, wobei das Korrelationszeitfenster eine vorbestimmte Länge hat,
**dadurch gekennzeichnet, dass** die Länge des Korrelationszeitfensters basierend auf der detektierten oder geschätzten Entfernung zwischen der Basisstation und der Mobilstation eingestellt wird.

2. Eine Mobilstation nach Anspruch 1, **gekennzeichnet dadurch, dass** die detektierte oder geschätzte Entfernung zwischen der Basisstation und der Mobilstation auf der Information von der Basisstation über ihre gesendete Leistung basiert.

3. Eine Mobilstation nach Anspruch 1, **dadurch gekennzeichnet, dass** die detektierte oder geschätzte Entfernung zwischen der Basisstation und der Mobilstation auf der Information über die aktuelle Position der Mobilstation hinsichtlich der Basisstation basiert.

4. Eine Mobilstation nach Anspruch 3, **dadurch gekennzeichnet, dass** die Information über die aktuelle Position der Mobilstation hinsichtlich der Basisstation auf der Information von einem Global Positioning System (GPS) basiert.

## Revendications

1. Station mobile destinée à être utilisée dans un système de communications sans fil à Accès Multiples par Répartition de Codes (AMRC) avec une station de base (SB), la station mobile comportant, pour la compensation de la réception par trajets multiples de signaux émis par la station de base et reçus avec des retards différents par la station mobile, un récepteur RAKE ayant :
- un filtre à code adapté ayant une suite prédéterminée de bribes pilotes et un moyen pour comparer des suites de bribes dans un signal reçu avec la suite de bribes pilotes et pour délivrer en sortie un signal dont la valeur dépend du résultat de la comparaison, et
- une fenêtre de temps de corrélation pour déterminer une corrélation des valeurs délivrées en sortie du filtre à code adapté sur la fenêtre de temps de corrélation, la fenêtre de temps de corrélation ayant une longueur prédéterminée,
**caractérisée en ce que** la longueur de la fenêtre de temps de corrélation est ajustée sur la base de la distance détectée ou estimée entre la station de base et la station mobile.

2. Station mobile selon la revendication 1, **caractérisée en ce que** la distance détectée ou estimée entre la station de base et la station mobile est basée sur une information provenant de la station de base et portant sur sa puissance émise.

3. Station mobile selon la revendication 1, **caractérisée en ce que** la distance détectée ou estimée entre la station de base et la station mobile est basée sur une information portant sur la position réelle de la station mobile par rapport à la station de base.

4. Station mobile selon la revendication 3, **caractérisée en ce que** l'information portant sur la position réelle de la station mobile par rapport à la station de base est basée sur une information provenant d'un système de positionnement terrestre (GPS).
